# NEUE EUROPÄISCHE PATENTSCHRIFT

(11) **EP 0 819 628 B2**
(45) Veröffentlichungstag und Bekanntmachung des Hinweises auf die Entscheidung über den Einspruch: **03.01.2007**
(45) Hinweis auf die Patenterteilung: 23.05.2001
(21) Anmeldenummer: 97111769.2
(22) Anmeldetag: 10.07.1997
(51) Int. Cl.: B65G 53/24, B65B 69/00

(54) **Verfahren zum Entleeren von Schüttgut**
Process of emptying of pourable material
Procédé de décharge de matériau capable de s'écouler

(30) Priorität: 15.07.1996 DE 19628429
(43) Veröffentlichungstag der Anmeldung: 21.01.1998
(73) Patentinhaber: Wilhelm, Klaus, 83022 Rosenheim (DE)
(72) Erfinder: Wilhelm, Klaus, 83022 Rosenheim (DE)
(74) Vertreter: Alber, Norbert

(56) Entgegenhaltungen:
- DE-A- 4 315 327
- DE-U- 29 515 675
- DE-U- 29 612 187
- US-A- 5 382 117

## Beschreibung

Die Erfindung betrifft ein Verfahren zum Entleeren von rieselfähigem Schüttgut aus flexiblen, insbesondere sack- oder beutelartigen Behältnissen gemäß dem Oberbegriff der Patentansprüche 1, und 4.

In vielen technischen Bereichen, insbesondere auch in der kunststoffverarbeitenden Industrie, liegen die zu verarbeitenden Ausgangsprodukte in Form von rieselfähigem Schüttgut vor. Diese werden häufig in befüllten Gebinden, sog. Oktabinbehältern, angeliefert, die mit einer innenliegenden Folie ausgekleidet sind, d. h. einen innenliegenden Foliensack aufweisen, der das Schüttgut umgibt. Weiterhin sind zur Aufbewahrung und zum Transport von Schüttgütern auch Faltboxen mit innenliegendem Foliensack und Gewebesäcke bzw. gewebeverstärkte Säcke bekannt, auch Big-Bags genannt, bei denen keinerlei äußerer Verstärkungsbehälter vorgesehen ist.

Das Entleeren derartiger Behältnisse erfolgt hauptsächlich unter Verwendung von Absaugvorrichtungen, wobei ein Saugrohr wie eine Lanze in das Schüttgut gesteckt wird. Nachteilig ist hierbei jedoch, daß dieses Saugrohr durch eine Bedienungsperson ähnlich wie bei einem Staubsauger laufend manuell nachgeführt werden muß, um eine optimale Eintauchtiefe an der richtigen Absaugstelle zu gewährleisten. Hierdurch ist eine Bedienungsperson permanent oder zumindest über eine lange Zeit an der Absaugstelle gebunden. Weiterhin kann nicht vermieden werden, daß die Folie immer wieder an das Saugrohr angesaugt und dadurch der Absaugvorgang unterbrochen wird.

Wird auf das manuelle Nachführen des Saugrohrs verzichtet, tritt der Effekt auf, daß das Saugrohr zwar einen Teil des Schüttgutes wegsaugt, aber bei Schüttgutgebinden mit einem Durchmesser von einem Meter oder mehr weit entfernt liegende Schüttgutanteile nicht mehr an die Absaugstelle fließen. Mit sinkendem Füllstand im Gebinde wird das Problem noch dadurch verstärkt, daß sich kaum mehr ein Gefälle vom Gebinderand zur tiefsten Absaugstelle bilden kann.

Weiterhin ist es bekannt, gefüllte Gebinde mit innenliegender Folie, die das Schüttgut umgibt, auf eine Kippvorrichtung zu stellen und durch Neigen dieser Kippvorrichtung ein Auslaufen an einer bestimmten Stelle zu erreichen. Eine derartige Kippvorrichtung ist jedoch technisch aufwendig und benötigt einen großen Platzbedarf. Weiterhin ist mit diesen Kippvorrichtungen das teilweise Entleeren von Gewebesäcken nicht möglich.

Aus der DE 421 18 331 A1 ist eine Entleervorrichtung bekannt, bei dem der Schüttgutbehälter in seinem oberen Randbereich Über Zugfedern aufgehängt ist, die ein in sich vertikal bewegbares Hebezeug darstellen. Die Aufhängepunkte, an denen diese Zugfedern aufgehängt sind, befinden sich knapp außerhalb der Grundfläche der Transportbehälter, so daß der obere Randbereich des Schüttgutbehälters aufgrund der Zugkraft der Federn radial nach außen gezogen wird. Bei dieser bekannten Aufhängung besteht jedoch die Gefahr, daß beim Aussaugen des Schüttgutbehälters mittels einer von oben eingeführten Absaugvorrichtung das Absaugen des Schüttguts hauptsächlich in der Mitte des Schüttgutbehälters und weniger in dessen Randbereichen erfolgt, so daß häufig Krater gebildet werden.

Um diesem Problem zu begegnen, wird in der DE 4315 327 A1 ein Verfahren vorgeschlagen, bei dem die Behältniswandung zur Absaugvorrichtung hin nachgeführt, d.h. radial nach innen gezogen wird. Dabei erfolgt eine Auflockerung des Materials, z. B. indem das Behältnis dabei auf einer vibrierenden Abstelleinrichtung steht. Auch mit diesem bekannten Verfahren ist jedoch eine weitgehend restlose Entleerung des Behältnisses in der Regel nicht möglich.

Der Erfindung liegt von daher die Aufgabe zugrunde, ein Verfahren zum Entleeren von rieselfähigem Schüttgut zu schaffen, die es auf einfache Weise ermöglicht, das Schüttgut bei Verwendung einer von oben her in das Behältnis einführbaren Absaugvorrichtung ohne manuelle Betätigung der Absaugvorrichtung möglichst gleichmäßig und vollständig aus dem Behältnis zu entleeren.

Diese Aufgabe wird erfindungsgemäß durch die Merkmale der Patentansprüche 1, bzw. 4 gelöst.

Bei dem erfindungsgemäßen Verfahren gemäß Patentanspruch 4 wird das Behältnis mit zunehmender Entleerung wenigstens soweit nach oben gezogen, daß der untere Bereich des Behältnisses seitlich am Absaugkopf der Absaugvorrichtung anliegt und dabei das gesamte Behältnis mit dem Schüttgutrest vom Boden abgehoben ist.

Bei dem erfindungsgemäßen Verfahren gemäß Patentanspruch 1 wird gegen Ende des Entleerungsvorgangs das gesamte Behältnis mit dem Schüttgutrest vom Boden weggehoben.

Das Wegheben des Behältnisses vom Boden erfolgt dann, wenn die angelegte Zugkraft größer ist als die verbleibende Gewichtskraft des Schüttgutes einschließlich des Absaugkopfes bzw. Absaugrohres. Dadurch fließt dem an der tiefsten Stelle des Behältnisses nunmehr angeordneten Absaugrohr oder Absaugkopf das Restmaterial vom Behältnisrand her zur Mitte hin zu, wo es aufgenommen und abgesaugt werden kann. Hierdurch ist eine fast restlose Entleerung ohne manuelles Zutun möglich. Die Zugkraft für das Hebezeug wird dabei so eingestellt, daß die Reißfestigkeit des Sackmaterials nicht überschritten wird. Ferner signalisiert das Hochheben des Behältnisses dem Betreiber, daß das Behältnis fast vollständig entleert ist, so daß ein Behältniswechsel eingeleitet werden kann.

Der Hochziehvorgang kann zu jedem beliebigen Zeitpunkt unterbrochen werden, so daß es jederzeit möglich ist, bei einem erforderlichen Materialwechsel ein anderes Gebinde an die Absaugstelle zu bringen.

Das Hochziehen des Behältnisses erfolgt mittels Halteelementen, die über den Umfang eines Halterahmens regelmäßig verteilt angeordnet sind, wodurch ein gleichmäßiges Hochziehen und eine gleichmäßige Belastung des Behältnisses gewährleistet wird. Diese Halteelemente können hierbei aus Klemmelementen bestehen, welche die Behältniswand beidseitig umfassen und entsprechend einklemmen, oder aus Haken, die ggf. an Henkeln eingehängt werden, die am oberen Rand des Behältnisses vorgesehen sind.

Besonders vorteilhaft ist es, wenn der Halterahmen an drei Punkten aufgehängt ist, die über seinen Umfang regelmäßig verteilt sind. Eine derartige Dreipunktaufhängung bietet den Vorteil, daß der Halterahmen immer auf eine statisch bestimmte Weise horizontal ausgerichtet bleibt und ein unerwünschtes Kippen auch bei ungleichmäßiger Befestigung des Hebezeugs am Behältnis vermieden werden kann. Die Dreipunktaufhängung des Halterahmens besteht vorzugsweise aus drei gleich langen Seilen oder Ketten, die an ihrem einen Ende an einem Seilzug befestigt sind. Dieser Seilzug wird zweckmäßigerweise über Umlenkrollen zu der Hubeinrichtung geführt, wobei die Umlenkrollen an einem das zu entleerende Behältnis umgebenden Rahmengestell oder direkt an den Gebäudewänden befestigt sein können. Anstelle eines Seilzuges kann auch ein Kettenzug verwendet werden.

Die Erfindung wird nachfolgend anhand der Zeichnungen beispielshaft näher erläutert. In diesen zeigen:
- Figur 1: eine schematische, perspektivische Darstellung der an einem Rahmengestell befestigten Entleervorrichtung in abgesenktem Zustand ohne Absaugvorrichtung, wobei ein vorderer Stützpfosten des Rahmengestells der besseren Übersichtlichkeit wegen weggeschnitten wurde,
- Figur 2: eine Figur 1 entsprechende Darstellung mit einem Oktabin mit innenliegendem Foliensack, der das zu entleerende Schüttgut enthält, wobei der Foliensack von der Entleervorrichtung ergriffen und diese in der angehobenen Stellung gezeigt ist,
- Figuren 3A und 3B: teilweise geschnittene Seitenansichten der Entleervorrichtung mit einem Oktabin und einer Absaugvorrichtung, wobei die Positionen zu Beginn bzw. am Ende des Absaugvorganges gezeigt sind, und
- Figuren 4A und 4B: eine Darstellung entsprechend den Figuren 3A und 3B, wobei als Behältnis ein Big-Bag mit Henkeln verwendet wird.

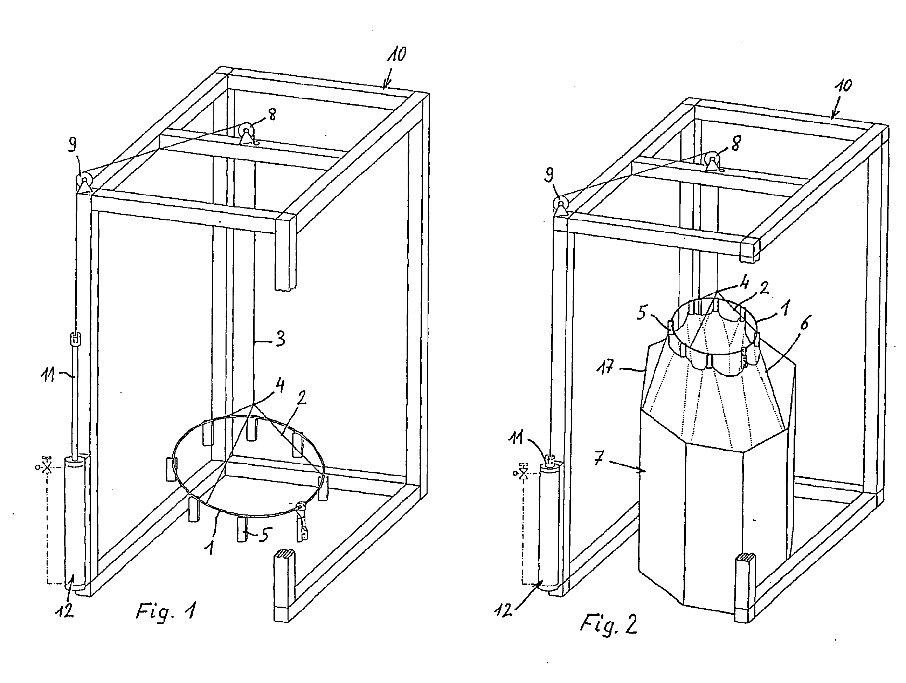

Wie aus Figur 1 ersichtlich, besteht die Entleervorrichtung im wesentlichen aus einem ringförmigen

Halterahmen 1 aus einem biegefesten Material, beispielsweise Stahl, der über drei Zugelemente in der Form von Seilen 2 an einem Seilzug 3 aufgehängt ist.

Die Seile 2 weisen die gleiche Länge auf und sind über den Umfang des Halterahmens 1 regelmäßig angeordnet, d. h. mit ihrem unteren Ende am Halterahmen 1 befestigt, während ihre gegenüberliegenden Enden an einer zentralen Verbindungsstelle 4 zusammenlaufen und dort am Seilzug 3 befestigt sind. Diese Dreipunktaufhängung gewährleistet, daß der Halterahmen 1 in statisch bestimmter Weise aufgehängt ist, wobei er in einer horizontalen Ebene liegt.

Vom Halterahmen 1 aus erstrecken sich acht Klemmelemente 5 für einen in den Figuren 2 bis 3B gezeigten Foliensack 6 nach unten, wobei dieser Foliensack die Innenverkleidung eines Oktabins 7 darstellt, in dem das Schüttmaterial, beispielsweise Kunststoffgranulat, enthalten ist.

Die Klemmelemente 5 sind regelmäßig über den Umfang des Halterahmens 1 angeordnet, d. h. sie weisen zueinander einen gleichmäßigen Abstand auf, wobei sie schwenkbar am Halterahmen 1 befestigt sind. Die Klemmelemente 5 bestehen im dargestellten Ausführungsbeispiel aus zwei Klemmbacken, zwischen denen der Foliensack 6 in seinem oberen Randbereich eingeführt werden kann, worauf die Klemmbacken zusammengepreßt werden und den Foliensack zwischen sich einklemmen. Um eine sichere Halterung des Foliensackes 6 zwischen den Klemmbacken zu gewährleisten, können diese mit entsprechenden Gummiflächen oder gerippten Flächen versehen sein.

Der Seilzug 3 ist über Umlenkrollen 8, 9 geführt, die an der Oberseite eines Rahmengestells 10 angeordnet sind.

Diese Seilzugführung bewirkt, daß der Seilzug 3 zunächst vertikal nach oben zur Oberseite des Rahmengestells 10 und von dort in horizontaler Richtung bis zur Umlenkrolle 9 geführt wird, die sich im Bereich einer oberen Ecke des Rahmengestells 10 befindet. Von der Umlenkrolle 9 aus erstreckt sich der Seilzug 3 wiederum vertikal nach unten und ist an seinem freien Ende an einer Kolbenstange 11 eines Hubzylinders 12 befestigt. Der Hubzylinder 12 kann pneumatisch oder hydraulisch betätigt werden. Alternativ zu einem Hubzylinder ist es auch möglich, andere alternative Hubeinrichtungen wie beispielsweise einen Elektromotor oder eine manuell betätigbare Handkurbel, zu verwenden.

In Figur 1 ist die Kolbenstange 11 des Hubzylinders 12 voll ausgefahren, so daß sich der Halterahmen 1 mit den daran befestigten Klemmelementen 5, die zusammen ein Hebezeug bilden, sich in ihrer tiefsten Stellung befinden.

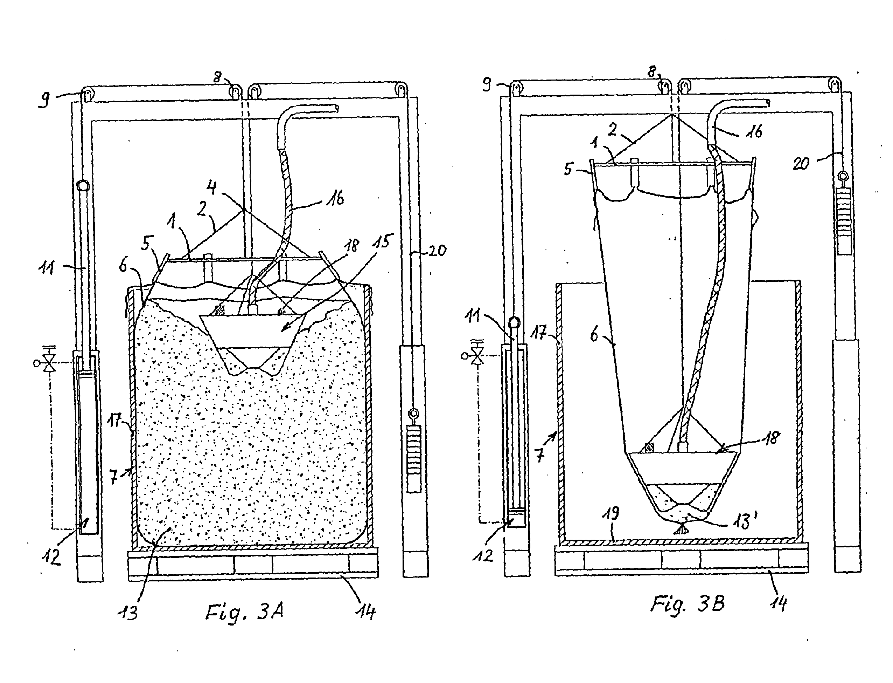

In dieser tiefsten Stellung bzw. in einer nur leicht angehobenen Stellung des Hebezeugs kann der das Schüttgut 13 enthaltende und auf einer Palette 14 stehende Oktabin 7 (Figur 3A) beispielsweise mittels eines Gabelstaplers in das portalartige Rahmengestell 10 eingefahren werden, bis sich der Oktabin 7 mittig unterhalb des Hebezeugs befindet. Anschließend werden die Klemmelemente 5 im oberen Randbereich des Foliensackes 6 festgeklemmt und eine Absaugvorrichtung 15 von oben her in den Foliensack 6 eingeführt. Bei der Absaugvorrichtung 15 kann es sich, wie in den Figuren 3A und 3B dargestellt, um einen an einen Saugschlauch 16 angeschlossenen, schwimmfähigen Absaugkopf 18 oder alternativ hierzu lediglich um ein Absaugrohr handeln, das von oben her wie ein Staubsaugerrohr in den Foliensack 6 eingeführt wird. Das Schüttgut 13 kann nun über den Saugschlauch 16 der Absaugvorrichtung 15 aus dem Foliensack 6 herausgesaugt werden. Da die Absaugvorrichtung 15 als solche bekannt ist, wird diese nicht näher beschrieben.

Zu Beginn des Entleervorgangs, der in Figur 3A dargestellt ist, ist der Foliensack 6 zumindest weitgehend mit dem Schüttgut 13 gefüllt, so daß er bis in die Nähe des oberen Randbereichs einer starren, achteckigen Außenumhüllung 17 des Oktabins 7 an die Innenumfangswand dieser Außenumhüllung 17 gedrückt wird. Da sich in diesem Anfangsstadium der Halterahmen 1 in einer relativ tiefen Position befindet, ist die Kolbenstange 11 des Hubzylinders 12 relativ weit ausgefahren.

Während des Absaugens des Schüttgutes 13 wird die Kolbenstange 11 kontinuierlich in das Innere des Hubzylinders 12 eingezogen, wodurch das Hebezeug entsprechend angehoben und der Foliensack 6 nach oben strammgezogen, d. h. gestreckt wird. Da der Halterahmen 1 einen kleineren Durchmesser als der Oktabin 7 aufweist, wird der obere Randbereich des Foliensackes 6 gleichzeitig radial nach innen gezogen. Hierdurch wird das Fließen des Schüttgutes 13 von den Randbereichen des Oktabins 7 zu seiner Mitte hin unterstützt, wo sich der Absaugkopf 18 der Absaugvorrichtung 15 befindet.

Mit zunehmender Entleerung wird der Foliensack 6 mittels der Hubeinrichtung 12 immer weiter nach oben gezogen, wodurch der Foliensack 6 fortlaufend und zunehmend gestreckt wird.

Der Zustand der völligen oder zumindest fast völligen Entleerung des Oktabins 7 ist in Figur 3B dargestellt. In diesem Zustand nimmt der Foliensack 6 einen im Verhältnis zur starren Außenumhüllung 17 wesentlich verringerten Durchmesser ein, wobei lediglich im untersten Bereich des Foliensackes 6 eine Restmenge 131 an Schüttgut vorhanden ist. Diese Restmenge 131 befindet sich lediglich unterhalb, nicht jedoch seitlich neben dem Absaugkopf 18, an dem der untere Bereich des Foliensackes 6 seitlich anliegt.

Im entleerten Zustand des Oktabins 7 ist die Kolbenstange 11 zumindest weitgehend in das Innere des Hubzylinders 12 zurückgezogen, wodurch das Hebezeug soweit angehoben wird, daß der Foliensack 6 geringfügig vom Boden 19 der Oktabin-Außenumhüllung 17 abgehoben ist. Dies zeigt dem Betreiber, daß der Oktabin 7 entleert ist und ausgewechselt werden kann.

Die Endstellungen des Hubzylinders 12, d. h. die maximalen Ausfahr- und Einzugslängen der Kolbenstange 11, werden zweckmäßigerweise durch geeignete, nicht dargestellte Endschalter bestimmt und sind vorteilhafterweise variabel, um sich an unterschiedliche Behältnishöhen anzupassen.

Anstelle eines kontinuierlichen Hochziehens des Foliensackes 6 kann dieser auch intermittierend, d. h. stufenweise, hochgezogen werden.

Ein in den Figuren 3A und 3B weiterhin dargestellter Seilzug 20 dient lediglich dem Gewichtsausgleich für den Absaugkopf 18, damit dieser mit einer vorbestimmten Druckkraft auf dem Schüttgut 13 aufliegt und auf diesem schwimmt. Dieser Gewichtsausgleich wird hier nicht näher beschrieben.

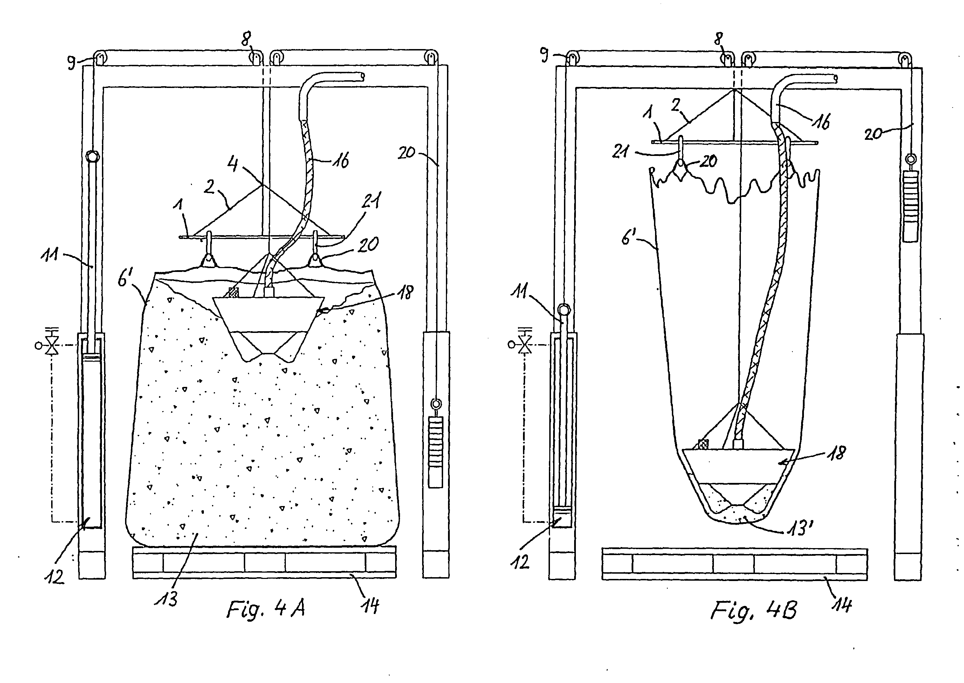

Bei der in den Figuren 4A und 4B gezeigten alternativen Ausführungsform wird kein Oktabin, sondern ein sog. Big-Bag 6' verwendet, welcher keine starre Außenumhüllung aufweist, sondern lediglich aus einem reifsten Gewebesack besteht. Am oberen Rand des Big-Bags 61 sind vier Henkel 20 vorgesehen, die zum Transport dienen.

Die in den Figuren 4A und 4B gezeigte alternative Ausführungsform der Entleervorrichtung unterscheidet sich von derjenigen der Figuren 1 bis 3B nur dadurch, daß anstelle der Klemmelemente 5 Haken 21 am Halterahmen 1 befestigt sind, die in die Henkel 20 eingreifen, um den Big-Bag 61 während des Entleerens des Schüttgutes 13 in entsprechender Weise hochzuziehen. Die übrige Ausgestaltung und Funktionsweise dieser Entleervorrichtung ist identisch zu der erstgenannten Ausführungsform.

## Patentansprüche

1. Verfahren zum Entleeren von rieselfähigem Schüttgut (13), aus flexiblen, insbesondere sack- oder beutelartigen Behältnissen (6, 6') mittels einer Absaugvorrichtung (15), wobei
- die Absaugvorrichtung (15) von oben her in das Behältnis (6, 6') eingeführt wird,
- ein Hebezeug (1; 5, 21), umfassend einen ringförmigen oder mehreckigen Halterahmen (1), an dem die Halteelemente (5, 21) befestigt sind und der einen kleineren Durchmesser als das Behältnis (6, 6') aufweist, mit dem oberen Randbereich des Behältnisses (6, 6') in Halteeingriff gebracht wird,
- das Hebezeug (1; 5, 21) mittels einer Hubeinrichtung (12) in vertikaler Richtung bewegt wird, um das Behältnis (6, 6') zu strecken,
- wobei der obere Randbereich des Behältnisses (6, 6') beim Hochziehen radial nach innen gezogen wird,
**dadurch gekennzeichnet, daß**
gegen Ende des Entleerungsvorganges das gesamte Behältnis (6, 6') mit dem Schüttgutrest vom Boden weggehoben wird.

2. Verfahren nach Anspruch 1,
**dadurch gekennzeichnet, daß**
die Hubeinrichtung (12) eine Zugkraft auf das Behältnis (6, 6') ausübt, welche größer als die Gewichtskraft der Absaugvorrichtung (15) und des restlichen Schüttguts gegen Ende des Entleervorganges, jedoch geringer als die Reißfestigkeit des Materials des Behältnisses (6, 6') ist.

3. Verfahren nach Anspruch 1 oder 2,
**dadurch gekennzeichnet, daß**
das Hochheben des Behältnisses (6, 6') als Signal für das fast vollständige Entleeren des Behältnisses (6, 6') dient.

4. Verfahren zum Entleeren von rieselfähigem Schüttgut (13), aus flexiblen, insbesondere sack- oder beutelartigen Behältnissen (6, 6') mittels einer Absaugvorrichtung (15) mit einem Absaugkopf (18), wobei
- die Absaugvorrichtung (15) von oben her in das Behältnis (6, 6') eingeführt wird,
- ein Hebezeug (1; 5, 21), umfassend einen ringförmigen oder mehreckigen Halterahmen (1), an dem die Halteelemente (5, 21) befestigt sind und der einen kleineren Durchmesser als das Behältnis (6, 6') aufweist, mit dem oberen Randbereich des Behältnisses (6, 6') in Halteeingriff gebracht wird,
- das Hebezeug (1; 5, 21) mittels einer Hubeinrichtung (12) in vertikaler Richtung bewegt wird, um das Behältnis (6, 6') zu strecken,
- wobei der obere Randbereich des Behältnisses (6, 6') beim Hochziehen radial nach innen gezogen wird,
**dadurch gekennzeichnet, daß**
mit zunehmender Entleerung das Behältnis (6, 6') immer weiter nach oben gezogen und zunehmend gestreckt wird, bis der untere Bereich des Behältnisses (6, 6') seitlich am Absaugkopf (18) der Absaugvorrichtung (15) anliegt und dabei das gesamte Behältnis (6, 6') mit dem Schüttgutrest vom Boden weggehoben ist.

5. Verfahren nach Anspruch 4,
**dadurch gekennzeichnet, daß**
das Hochziehen und Strecken des Behältnisses (6, 6') so lange erfolgt, bis die Restmenge (13') des Schüttgutes (13) sich lediglich unterhalb, nicht jedoch seitlich des Absaugkopfes (18) im Behältnis (6, 6') befindet.

## Claims

1. A method of emptying flowable loose material (13) from flexible, in particular sack-type or bag-type containers (6, 6') by means of a suction removal apparatus (15), wherein
- the suction removal apparatus (15) is introduced into the container (6, 6') from above,
- a hoist (1; 5; 21) including an annular or polygonal holding frame (1) to which the holding elements (5, 21) are secured and which is of a smaller diameter than the container (6, 6') is brought into holding engagement with the upper edge region of the container (6, 6'),
- the hoist (1; 5, 21) is moved in a vertical direction by means of a lifting device (12) in order to stretch the container (6, 6'),
- wherein the upper edge region of the container (6, 6') is drawn radially inwardly in the lifting movement,
**characterised in that**
towards the end of the emptying operation the entire container (6, 6') with the remainder of the loose material is lifted off the floor.

2. A method according to claim 1
**characterised in that**
the lifting device (12) applies to the container (6, 6') a traction force which is greater than the force due to the weight of the suction removal apparatus (15) and the remaining loose material towards the end of the emptying operation but is less than the tearing strength of the material of the container (6, 6').

3. A method according to claim 1 or 2 ,
**characterised in that**
lifting of the container (6, 6') serves as a signal for almost complete emptying of the container (6, 6').

4. A method of emptying flowable loose material (13) from flexible, in particular sack-type or bag-type containers (6, 6') by means of a suction removal apparatus (15) having a suction removal head (18), wherein
- the suction removal apparatus (15) is introduced into the container (6, 6') from above,
- a hoist (1; 5, 21) including an annular or polygonal holding frame (1) to which the holding elements (5, 21) are secured and which is of a smaller diameter than the container (6, 6') is brought into holding engagement with the upper edge region of the container (6, 6'),
- the hoist (1; 5, 21) is moved in a vertical direction by means of a lifting device (12) in order to stretch the container (6, 6'),
- wherein the upper edge region of the container (6, 6') is drawn radially inwardly in the lifting movement,
**characterised in that**
with increasing emptying the container (6, 6') is progressively further drawn upwardly and increasingly stretched until the lower region of the container (6, 6') bears laterally against the suction removal head (18) of the suction removal apparatus (15) and wherein in the same time the entire container (6, 6') with the remainder of the loose material is lifted off the floor.

5. A method according to claim 4
**characterised in that**
the procedure of raising and stretching the container (6, 6') continues until the residual amount (13') of the loose material (13) is only beneath but not laterally of the suction removal head (18) in the container (6, 6').

## Revendications

1. Procédé pour la décharge de produit en vrac coulant (13), de conteneurs (6, 6') flexibles en particulier en forme de sac ou sachets au moyen d'un dispositif d'aspiration (15),
- le dispositif d'aspiration (15) étant introduit par en haut dans le conteneur (6, 6'),
- un engin de levage (1; 5, 21), qui comprend un cadre de retenue (1) annulaire ou polygonal sur lequel sont fixés les éléments de retenue (5, 21) et qui présente un diamètre inférieur à celui du conteneur (6, 6'), étant amené en prise avec la zone de bord supérieur du conteneur (6, 6'),
- l'engin de levage (1; 5, 21) étant déplacé au moyen d'un dispositif de levage (12) dans le sens vertical pour étirer le conteneur (6, 6'),
- de sorte que la zone supérieure de bordure du conteneur (6, 6') est tirée radialement vers l'intérieur,
**caractérisé en ce que**
vers la fin de l'opération de décharge l'ensemble du conteneur (6, 6') avec le reste de produit en vrac est soulevé du sol.

2. Procédé selon la revendication 1,
**caractérisé en ce que**
le dispositif de levage (12) exerce une force de traction sur le conteneur (6, 6') qui est supérieure à la force pondérale du dispositif d'aspiration (15) et du produit résiduel en vrac vers la fin de l'opération de décharge, mais cependant inférieure à la résistance à l'arrachage du matériau du conteneur (6, 6').

3. Procédé selon la revendication 1 ou 2,
**caractérisé en ce que**
le soulèvement du conteneur (6, 6') sert de signal au vidage presque intégral du conteneur (6, 6').

4. Procédé pour la décharge de produit coulant en vrac (13), de conteneurs (6, 6') flexibles en particulier en forme de sac ou sachets au moyen d'un dispositif d'aspiration (15) muni d'une tête d'aspiration (18),
- le dispositif d'aspiration (15) étant introduit par en haut dans le conteneur (6, 6'),
- un engin de levage (1; 5, 21) comprenant un cadre de retenue (1) annulaire ou polygonal sur lequel sont fixés les éléments de retenu (5, 21) et qui présente un diamètre inférieur à celui du conteneur (6, 6'), étant amené en prise avec la zone de bord supérieur du conteneur (6, 6'),
- l'engin de levage (1; 5, 21) étant déplacé au moyen d'un dispositif de levage (12) dans le sens vertical pour étirer le conteneur (6, 6'),
- de sorte que la zone supérieure de bordure du conteneur (6, 6') est tirée radialement vers l'intérieur,
**caractérisé en ce qu'**
avec la décharge croissante, le conteneur (6, 6') continue d'être tiré vers le haut et est étiré de plus en plus jusqu'à ce que la zone inférieure du conteneur (6, 6') s'applique latéralement sur la tête d'aspiration (18) du dispositif d'aspiration (15) et en même temps l'ensemble du conteneur avec le reste du produit en vrac est soulevé du sol.

5. Procédé selon la revendication 4,
**caractérisé en ce que**
le soulèvement et l'étirement du conteneur (6, 6') s'effectuent aussi longtemps que la quantité résiduelle (13) du produit en vrac (13) se trouve simplement dans le conteneur (6, 6') en dessous de la tête d'aspiration (18) mais pas cependant latéralement de la tête d'aspiration.
